# EUROPEAN PATENT APPLICATION

(11) **EP 3 127 426 A1**
(43) Date of publication of application: **08.02.2017**
(21) Application number: 14887745.9
(22) Date of filing: 31.03.2014
(51) Int. Cl.: A01N 25/12, A01N 1/02

(54) **INSECT ATTRACTANT DIFFUSER**

(71) Applicant: AO Midori Biocontrol S.L., 08784 Piera (Barcelona) (ES); Probodelt S.L., 43870 Amposta (Tarragona) (ES)
(72) Inventor: ROIG REVERTE, Jordi, E-43870 Amposta (Tarragona) (ES); ZURITA ESPINOSA, Maria Dacil, E-08784 Piera (Tarragona) (ES)
(74) Representative: Toro Gordillo, Ignacio Maria
(86) International application number: PCT/ES2014/070241
(87) International publication number: WO 2015/150595

(57) **Abstract**

The invention relates to a diffuser provided for the diffusion of insect attractants, characterised in that it comprises a powdery or granular matrix that can absorb water or other liquids, said matrix being impregnated or mixed with the attractant components and the entirety is arranged inside a bag or container which is partially or entirely formed by a permeable membrane via which the vapours of the attractant components diffuse.

## Description

### OBJECT OF THE INVENTION

The present invention relates to an insect attractant diffuser, which includes what is considered to be a support for the corresponding attractant components, and has the particular feature that this support corresponds to a powdery or granular matrix that can absorb water or other liquids, said matrix being impregnated or mixed with the attractant components in order to be contained inside a bag or container which is partially or entirely formed by a permeable membrane via which the vapors of the attractant components diffuse.

### BACKGROUND OF THE INVENTION

There are different attractant diffuser devices on the market which involve the mass trapping of insects for pest control. The most efficient type of this device is the one that uses permeable membranes, such as the case of invention patent ES 2,257,219 A1, which uses a cellulose support impregnated with a solution of attractant components as a matrix. The efficiency of products in the field is important for applications of insect control via mass trapping, although it is also important that they can be supplied at the lowest cost possible for large-scale use.

The problem with current diffusers is that they require complex manufacturing processes that drive up their cost and there is a lack of homogeneity among the liquid preparations that are emitted.
- The use of solutions makes the manufacturing process more complicated and costly: it is necessary to carry out impregnation of the support material (piece of cellulose) and the packing of the material support, which is usually rigid, therefore making process automation more difficult.
- The presence of solvents, such as water, in the formulation leads to a high level of variability during the first few days of the diffusion. During this time, the water or the solvent quickly evaporate and take with it many attractant components, and over the next few days, the water has already evaporated.

Patents that refer to attractant + membrane mixtures:
- Patent US 5766617 A, which mentions an attractant for fruit flies with a membrane that is made up of ammonium acetate and putrescine, and the addition of trimethylamine as a synergist.
- Patent US 6224890 B1, which mentions an attractant for fruit flies which emits vapors of: ammonia (acetic acid or ammonium carbonate or ammonium bicarbonate and putrescine) with a synergist (3-alkyl-1-butanol or 3-methyl-1-butanol), and combinations with different types of membranes, such as polyethylene, polypropylene or polyvinyl chloride.
- Patent ES 2257219 A1, which mentions an attractant for fruit flies which forms a trap + container, with a support material impregnated with a solution that contains diaminoalkane, ammonium acetate and trimethylamine. The subsequent claims refer to membrane types and the incorporation of insecticide in the same diffuser.

The object is focused on the fact that, to date, there were attractants with three diffusers and the three components were successfully placed on one single diffuser, essentially by using a membrane that lets vapor, but not water, pass through: Tyvek by Dupont.

The explanation states that a polyethylene membrane can be used inside the trap so that the release occurs more slowly. Advantage: it does not need insecticide, it captures more and it is economically better because it is a byproduct of the manufacture of heparin.

Patents that use absorbents: silicates, kaolins, clays, or similar:
- Patent WO 2007012689 A2, which mentions different compositions of the attractants. Claim 4 refers to absorption through an organic or inorganic material, or mixtures, such as SILICATES, ALUMINOSILICATES, etc.
   In this publication, a powder + membrane is not used; instead, the absorbent is compressed to create pills or tablets.
- Patent WO 1996039824, which mentions regulation of the release, based on absorbents, surfactants, gels, etc. There is no membrane.
- Patent WO 1999044420, in which absorption is carried out on zeolites that are compacted. There are no membranes.
- Similar characteristics are found in Patent WO 2000002448 A1.
- Patent WO 2005086999 A1, which mentions a food bait in the form of a semi-solid gel to capture Tephritidae with insecticide (attract and kill).

### DESCRIPTION OF THE INVENTION

The diffuser mentioned uses as its main differentiating factor, with respect to all of the documents referred to previously, the fact that it possesses a dry powdery or granular matrix that is impregnated or mixed with attractant components, having in its interior a container made up of a permeable membrane via which vapors of the attractant components diffuse.

This container formed by the membrane can be partially or entirely formed by the permeable membrane itself, while the dry mixture that forms the matrix is composed of one or more attractant substances and one or more excipients/absorbents.

The main advantages that are derived from the diffuser with a dry powdery or granular matrix, according to the invention, can be summarized by the following:
- The ease of manufacture at a low cost with machines that create standard one-dose packets.
- The ease with which the devices can be adapted to different emission needs, simply by changing the size of the packet and/or the membrane and its permeability characteristics.
- It allows formulations of attractants without solvents, such that the speed of diffusion is not initially altered by the emission of water or solvents in large amounts.
- In cases when the presence of moisture or small amounts of water is necessary for the products contained in the diffuser to carry out their attractant function (by dragging or hydrolysis, depending on the case), the powdery solid that functions as a support can absorb moisture from the environment and retain the right amount of it so that this decomposition or hydrolysis occurs. As a result, the necessary volatile components that attract the insects are formed, which is the necessary objective in certain situations for the emission of the volatile elements derived from the attractant substances.
- In particular, a day-night effect is observed, in which the absorption of water occurs during the night hours, when there is higher environmental humidity, and then that water is released to the environment together with the attractant vapors during the day, which generally requires a faster speed of diffusion.
- In attractant products with greater volatility, the powdery or granular absorbent exercises a regulating effect on the emission of the product, controlling the speed of evaporation as well as increasing its persistence in the field.

Some specific examples of different ways of designing the diffuser of the invention are explained below.

### EXAMPLE 1:

Diffuser with three attractant components for fruit flies such as *Ceratitis capitata* (ammonium acetate, trimethylamine hydrochloride and a diaminoalkane), dry mixed with powdery sodium polyacrylate (which could be polyacrylates, silicates, kaolins, talcs, etc. or other powdery or granular absorbents with the capacity to absorb and retain water and other liquids), The mixture looks like a white powder that can be measured out directly into "single-dose" packets, thus simplifying and reducing the cost of the process of manufacturing the diffusers. In this case, the packet comprises Tyvek (Dupont) on one side and a material that is impermeable to vapors on the other side.

The presence of water in small amounts is necessary to carry out the decomposition of ammonium salts and, as a result, the emission of the corresponding acetic acid, ammonium and amines, which are the components responsible for the attraction of the flies of the genus *Bactrocera,* or in this case *Ceratitis* sp. Sodium polyacrylate absorbs moisture from the environment, mainly at night, and it is used for the process of decomposition and the emission of volatile elements during the day, together with the evaporation of the water previously absorbed.

### EXAMPLE 2:

A diffuser of crystallized diammonium phosphate mixed with an absorbent of sodium polyacrylate, in a packet made up of Tyvek on both sides. As in the previous case, the presence of moisture is required to emit the ammonium vapors responsible for the attraction of flies, in this case *Bactrocera oleae*. In the same way, the dry powder absorbs moisture from the environment at night; and the emission of the resulting ammonium, together with the evaporation of the water absorbed during the hours of highest environmental humidity, occurs during the day.

### EXAMPLE 3:

A liquid parapheromone, such as Cuelure, is absorbed over powdery amorphous silicon oxide, which gives it a "dry" appearance and allows it to be packed with a standard dispenser of solids, in this case, a packet comprising two sides of non-woven fabric, which is permeable to the vapors of the substance. (In this case, an increase in the speed of diffusion is required, depending on whether LD polyethylene or Tyvek membranes are used), due to the low volatility of the parapheromone Cuelure. (In its conventional application, this parapheromone is used by impregnating it in cotton or wood rods, which are soaked in the substance to then be placed in traps, and they are cumbersome to handle.) The preparation in diffuser packets therefore helps minimize contact with the substance when preparing the attractant traps.

### EXAMPLE 4:

A pheromone, for example ferrugineol (the aggregation pheromone of *Rhynchophorus ferrugineus,* the red palm weevil), is absorbed in silicates and talc inside a single-dose packet, with a polyethylene window permeable to organic vapors. On the one hand, its manufacture is simplified, just Mike in the previous cases, and on the other, since it is absorbed in the silicates and talc, its volatility decreases and its persistence in the traps increases.

## Claims

1. An insect attractant diffuser, which comprises a support for the corresponding attractant components, **characterized in that** said support consists of a powdery or granular matrix, having in its interior a container of a vapor-permeable material.

2. The insect attractant diffuser according to claim 1, **characterized in that** the matrix corresponds to a dry powdery or granular mixture formed by one or more attractant substances and one or more excipients/absorbents.

3. The insect attractant diffuser according to the previous claims, **characterized in that** the matrix is capable of absorbing moisture from the environment and retaining the right amount of it so that the decomposition or hydrolysis needed in some cases for the emission of the volatile elements is produced.

4. The insect attractant diffuser according to the previous claims, **characterized in that** the permeable container is partially or completely determined by a membrane.

5. The insect attractant diffuser according to the previous claims, **characterized in that** the matrix is made up in part by moisture-retaining powders or granules.

6. The insect attractant diffuser according to the previous claims, **characterized in that** the diffusers are manufactured in single-dose packets
